# EUROPEAN PATENT APPLICATION

(11) **EP 2 026 265 A1**
(43) Date of publication of application: **18.02.2009**
(21) Application number: 08445025.3
(22) Date of filing: 12.08.2008
(51) Int. Cl.: G06Q 10/00

(54) **Technical tool for complex tasks**

(30) Priority: 16.08.2007 SE 0701867; 11.07.2008 SE 0801667
(71) Applicant: Olsson, Kjell, 175 52 Järfälla (SE)
(72) Inventor: Olsson, Kjell, 175 52 Järfälla (SE)

(57) **Abstract**

The technical development based on computer technology has generated large changes in the society and implies future possibilities of creations of new systems and tools for simplifying and improving people's ways of working and achieving results.

People need support and tools for handling complex dependences and for increasing the certainty of achieving desired results. The present invention is a technical tool, which is supporting solutions and accomplishment of complex tasks and processes, which primarily regard changes, creations of new systems, products etc. It includes a method for technical support of projects, where projects include processes for situation understanding, planning and execution, and where the task of the project is to change or develop at least a product or system from their start state to their end state. The method handles uncertainties in the project and provides users of the tool with probability measures for selected possible results within the project. The method gives the user graphical support.

## Description

### Background

The technical development based on computer technology has implied large changes in the society and will imply future possibilities to create new systems and tools to simplify and improve people's way of working and reach results.

The development also implies that society will grow more complex with increased amount of dependences of many factors. What has been locally bounded has been global. What has only involved a minor part of the society is now involving more areas, and what was earlier a limited detailed question is now regarded as having widespread consequences. People need support and tools to handle complex dependences and to increase the probability for attaining desired results. The need is evident within many areas and the need is increasing fast.

### Example:

- For people who want to influence, change or develop the present situation, the present state or the established system, and for people on various levels in the society.
- Within industry, in development of products or methods, and in public operations with tasks to improve their services in the society.
- For people who plan and accomplish actions to create something new, to change something or to attain effects and states in given systems.
   There are few technical systems which support operations of change. However there is a lot of systems, which support routine-handling of information, e.g. data handling of authorities and business operations. Examples on systems for routine-handling: Economic systems, accounting systems, Administrative systems, which handles data on stores, production, sales, etc., and which can deliver statistical data based on stored data.
- The present invention is not primarily created for said type of handling routine operations and their data handling.
   The present invention is a technical tool, which is supporting processes, which primarily concern changes, creation of new systems, products etc.
- This is a quite different type of tasks and requires a quite different type of technical support.
- The inventor hasn't found any similar system in literature, on internet or in contacts with persons operating in the field.
- The invention doesn't contain only a kernel invention, but there have also been required further contributing inventions to obtain a practically useful solution on the whole problem.
   The invention has area-relations to the earlier invention according to the Swedish patent no SE 527 758 C2 and the application PCT/SE2005/000358.
   The invention will be described from several perspectives to enlighten the technical function.

### State of the art and technical character

The present invention is a technical tool, which is supporting solution and accomplishment of complex tasks and processes, which primarily regard changes, creation of new systems, products etc. It includes a method for technical support of projects, where projects include processes for situation understanding, planning and execution, and where the task of the project is to change or develop at least a product or system from their start state to their end state. The method handles uncertainties in the project and provides users of the tool with probability measures for selected possible results within the project. The method gives the user graphical support.

The tool treats complexity by created data-storage structures. Data are stored in files, which are related to each other according to the structure. Input to a file is done through created graphics adapted to the corresponding file. The tool has also structures, which control the sequence of inputs to dependent files. The processor of the tool works on the stored data in the files according to the structure dependences.

Thus a graphic packet is related to its data storage file, which is related to other data storage files within the created structure, and the data processing is following those structures and structures for succession etc.

Thus the tool is a specialized engine designed for its special task. This engine can be constructed with a direct adapted data-storage function, likewise in/out function and adapted processor. A cheaper and acceptable alternative is to base the tool on the basic construction of a general computer, and in this computer create the tool's special data-storage, in/out functions and processes. A general computer can perform several basic functions. But it cannot perform the functions of the tool without the addition of the said tool constructions. Observe that the tool can support the creation of a plan. However the invention is not the plan, but it is the technical tool that is the invention. The plan might be better or worse dependent on the quality of the information the user put in. The tool runs its process on what it gets.

In the descriptions below the tool is shortly named DST ("Decision Support Tool").

### Complexity can be understood and treated with the use of several perspectives

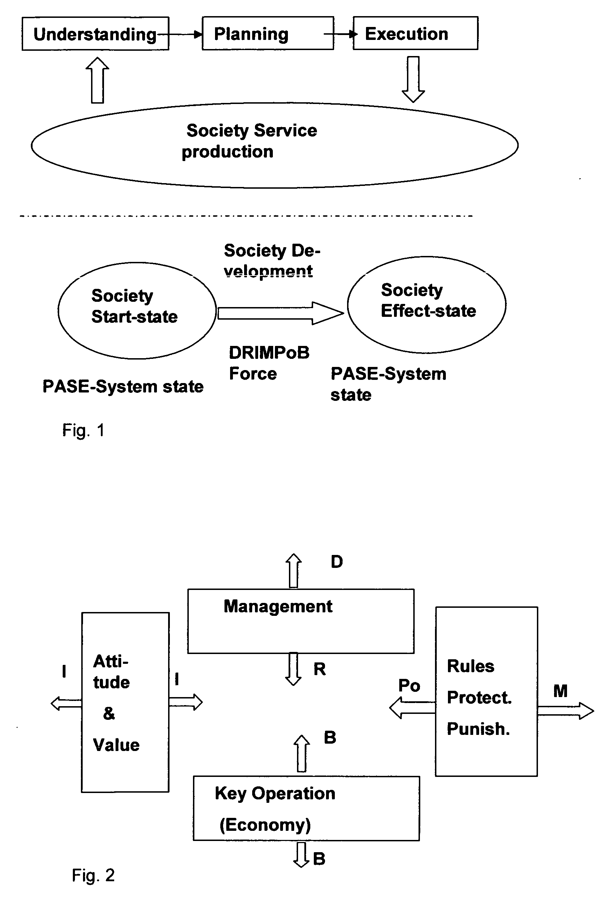

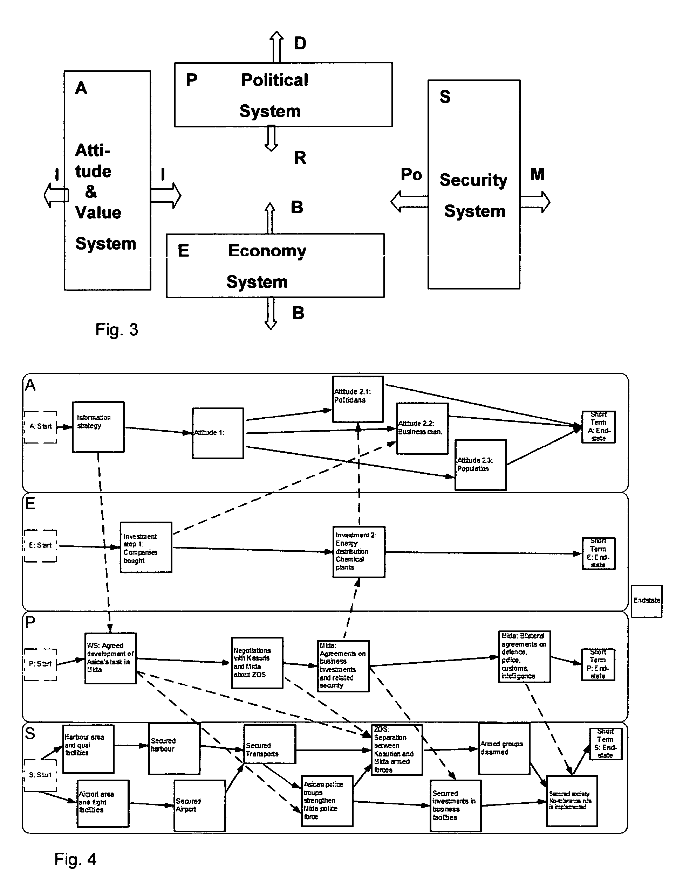

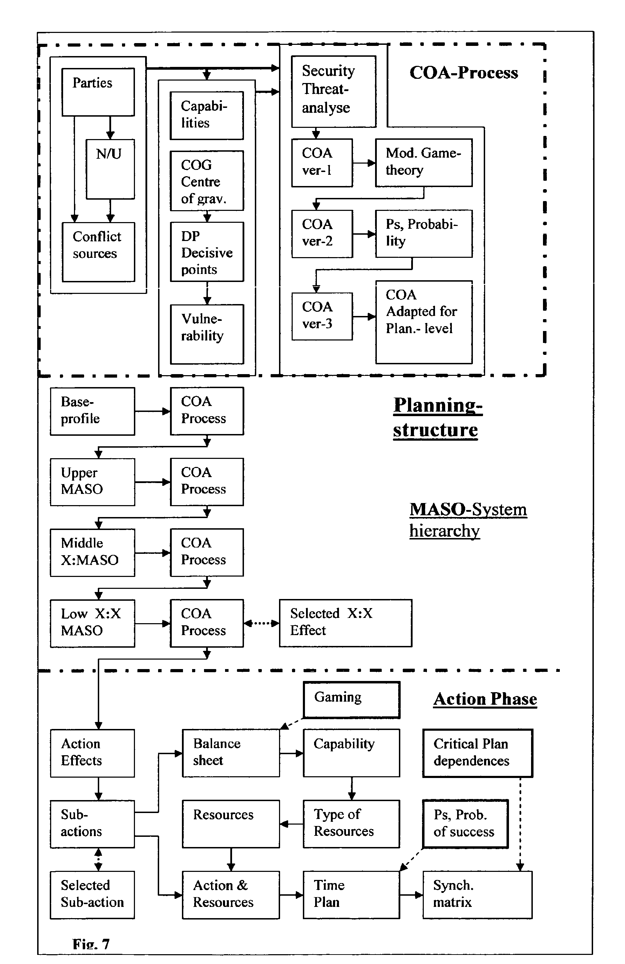

The invention will be described from several perspectives to enlighten the technical function.
- One perspective is the application perspective with user examples. One such example is the use for military operations. Those are characterized by complex situations and needs for relatively fast decisions on own actions dependent on other parties' (e.g. opponents) earlier and future actions. Example: Fig 1 - 4.
- A second perspective is the user perspective with interaction examples. Fig. 4 - 6 and 9 - 12.
- A third example is the invention's technical design and function. There are included system perspective, control perspective and design perspective considering data-storage and graphics for the input/output functions. Example: Fig. 7, 8, 13, 14

### Example on control perspective:

The tool contains two coupled "control functions": "One External and one Internal".

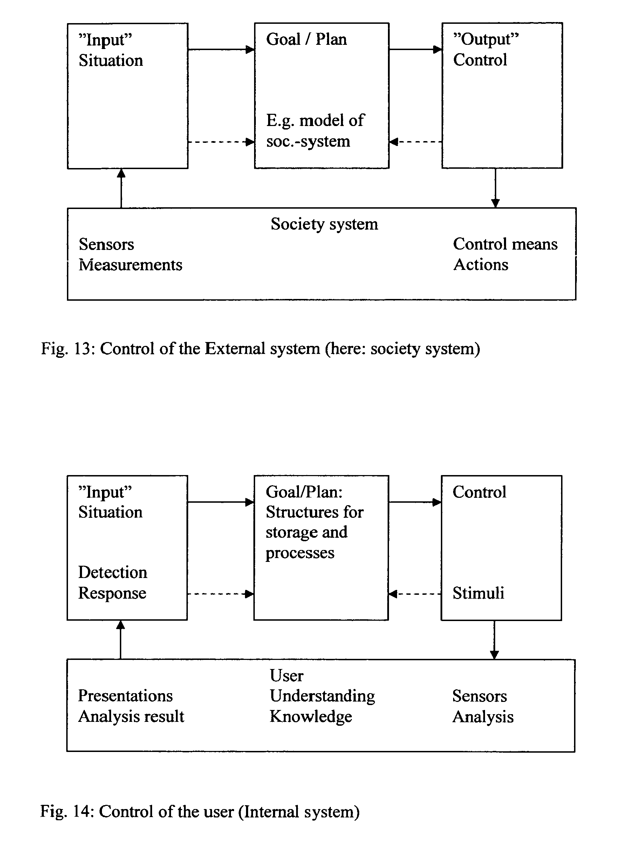

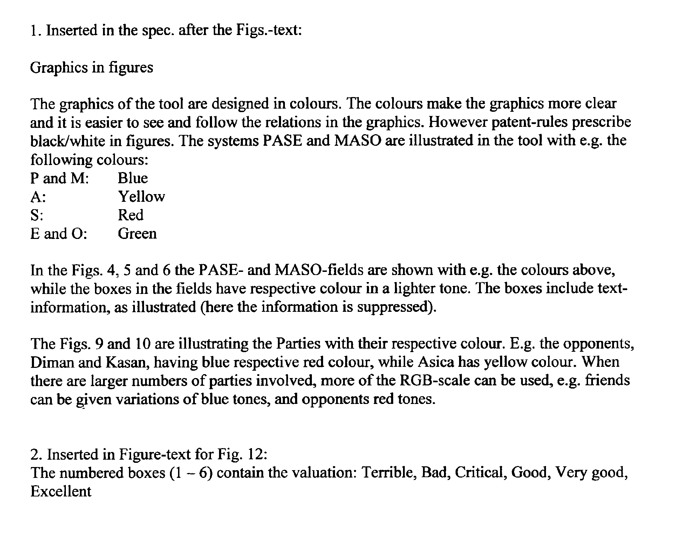

The Internal control function:
Traditionally computer tools were designed from the perspective of the user. The invention however has primarily been based on a quite different and opposite design perspective:
   In that perspective the user/human is the physical object, and the invention is that control system, which is applied on the user. By doing so, the possibility is opened for creating a technical design, which solves the complex problems better, which is the major task of the invention. In Fig 14 the control function is shown applied on the object: "The user".

Observe the differences between the invention and the results, which are created by the invention. E.g. a result can be a plan for military operations. The invention however is not the plan, but the technical tool, by which a user can contribute to the plan.

Then the said plan can be used in the External control function according to Fig 13, where the Goal and the Plan are seen placed in the middle box.

Then the control system gives control information for changes in the society system, in order that the Plan with its sub-goals can be attained. Information from measurements etc. on the changed situation is compared with the Plan and new control information is given. At large deviations from the Plan, the Plan might need corrections, and the Internal control system starts with stimuli to the user for new response, which is changing the Plan, in order that the new Plan can be attained from the new present state.

The Plan is important for the tool to be able to do the right control operation. But as said above, the Plan is not the invention. It is the tool, which has created the Plan in such a structured way that the tool can run the Plan against the real world. And it is also included in the invention to utilize the structures for changing and adapting the Plan to the real changed situations.

A control system doesn't only consist of control-functions out and response/sensor-information in, also if it seems to be so in more simple systems. E.g. a simple temperature control system might simply integrate the goal-temperature in the output control unit.

In complex control systems the Goal/Plan in the middle box (Fig. 13, 14) often contains a qualified and comprehensive function. It is in the middle box the qualified solution is placed, and it is from here the solution is realized by the External control system of the tool.

In the Internal control system there is also a middle box with Goal/Plan. This is the place for the special structures for data storage, relations to graphical in/out functions and control processes of the tool, i.e. what is controlling the user's contributing work in creating the said Plan.

The invention is a tool, which supports the creation of solutions of complex tasks. In the control-perspective above, we found that the Goal/Plan in the middle box is an essential part of the solution of the task. In the following section we shall start considering the invention from a system perspective.

### Introduction to system characteristics of the invention

Complexity is often a result, when several factors are involved and influencing a given situation in multiple ways. Complex matters need to be structured and subdivided into smaller problem areas. Each sub-area can be described with its content and its external relations to other sub-areas or areas. A sub-area at level B can be subdivided into several sub-areas at level C. When a sub-area is small enough, it is possible for the human mind to understand or create involved functions and their co-operation. A sub-area at level B can be made "small enough", by increasing the level of abstraction. Then the integrated results and integrated functions from a number of lower level sub-areas at level C would be handled at level B.

Several sub-areas connected by their internal relations, can form an integrated unit. In the invention there is included handling of a number of integrated units and the structure, which is relating those units. The technical tool is designed using corresponding structures to handle the various units. The system and data structure of the tool are parts of the invention and compose one of DST's three main parts: DST-structure part.

Two other main parts are DST-control part (including the Internal control system) and DST-application part.

DST-control part creates the information, which will be placed in the structure that DST-structure part has created. Thereby given information in respective box/file has been related to information in other boxes/files. A data information network has been created: DST-network.

DST-application part contains functions, which works on DST-network and create new information.

The complex task has obtained a first (phase-T) solution. That solution contains what one should do and how one should do it. The complex task can include a continuation with phase-I, i.e. the implementation of the phase-T solution in the reality (the External control system). It is obvious that there might be needed successive changes in the phase-T solution, not least because of an adaptation to a dynamic world in the phase-I.

DST-network creates possibilities for changes at a given position, and DST can follow resulting consequences according to the structure and adapt the solution.

Changes in the situation can e.g. be detected according to the said patent no. SE 527 758 C2 or with other methods.

The implementation process can be seen as a control system, where the phase-T solution gives control information to actions in reality and gets feed-back from the result. The new situation might give rise to changes of control information in the phase-T solution.

The above mentioned functions are included in DST-application.

### Summery of DST's function:

- The technical solution in DST catches the complex situation in its structure.
- With that base DST can handle changes in the complex situation.
- With that base DST can create a solution (including implementation) of complex tasks.

### Introduction to DST-structure part

One way to understand the technical requirements is by application of different system perspectives. We start with "Back-stream", i.e. we start with the end result and consider what has to be done before, to be able to achieve the end result:

### B. Example on a DST-function: Estimation/calculation of probabilities for the complex task to be executed:

B1. A prerequisite is the knowledge about involved sub-tasks and how those are related. Otherwise DST cannot put together probabilities for single sub-tasks in the right way to achieve the integrated result. It also means that larger sub-tasks must be broken down into smaller steps to obtain increased detailed knowledge and certainty in the probability estimations.
   Parallel tasks, hierarchical and serial dependences and possible selections of alternatives can be included in the structure, according to which calculations need to be performed.
B2. Complex tasks often contain changes in several major areas. Those areas have various prerequisites and are treated with their respective forces, capabilities and resources. Those main areas are designed with adapted structures and dependences. Otherwise DST cannot handle probabilities that successive changes will be attained with said forces, capabilities and resources.
B3. At selections between different alternative possibilities, the probability for success is an essential parameter, and the combination of selected alternatives is based on requirements on results of related actions, a Course of actions. Its structure is a part of (B1) above, and is created in DST according to DST's corresponding data-structure.
B4. Involved actors (parties) have differences in respective background, situation, problem and needs. They often have different valuations and changes (goals), which they want to achieve. Relations between actors are a base for possible co-operation or possible conflict. The actors are dominating factors in (B1 - B3) above, and they are a base for further structures as seen below.
B5: The complex task often has an origin in actors' experienced problems and desire to change their situation towards desired goals, i.e. a new desired situation for respective party. Then it is needed structures for descriptions of both the start-situation and the goal-situation. DST generates those structures.
B6. The parties' inequalities and unequal situations might constitute conflict sources. One's gain might be the other's loss. The start-situation can contain conflicts between parties, and one party's desired goal-situation can be in conflict with another party's desired goal-situation. The structure in (B5) is used by DST to generate differences between the parties' situations and from those identify conflict sources. It might appear that a party's goal-situation contains several and important conflict sources, which might imply that the solution is not stable. Then a solution that cannot be maintained is not a good solution. The natural way is compromising between own and others' desires to find an acceptable and stable solution. A more stable solution on the task can be achieved if the goal-situation contains fewer and less serious conflict sources. DST contains a structure for evaluation according to (B5 - B6).
B7. DST also has a structure for focusing on other parties' essential values. Within the military area this is called "COG, Centre of gravity" and is related to "DP, Decisive points" and "Vuln, Vulnerabilities". The notions are often used about the opponent, where COG is his "heart" and DP are functions, which enforce and protect COG, while Vuln are weak points. Military strategy includes attacking COG by avoiding strong DP and attacking his weak Vuln.
   In DST the notions are used more generally about parties' situations, e.g. for avoiding damage of own or others' COG by lack of knowledge. DST has a structure for COG-handling. Handling of (B4 - B6) includes COG-aspects according to the DST-structure.
B8. The opponents' and own COG-structures are used at (B3). In DST own capabilities are e.g. compared with the opponent's Vuln, and a positive over-weight can be used in a plan of actions (COA). In co-operation projects, actions increasing a party's COG, can create support for own success-prerequisites.

DST contains a structure, which controls the solution process for the complex task:
- A starting point is the situation for actors (B4) in the areas (B2).

### Summary of example B above:

In example B above a number of functions and structures are identified, which are included in DST.

Structures were motivated by requirements on relations between involved functions, e.g. what functions are performed before other ones, in order to contribute to the continued handling process.

The technical solution in DST contains data-structures and relations, which contribute to create a solution of the complex task in a DST-controlled interactive process with the user.

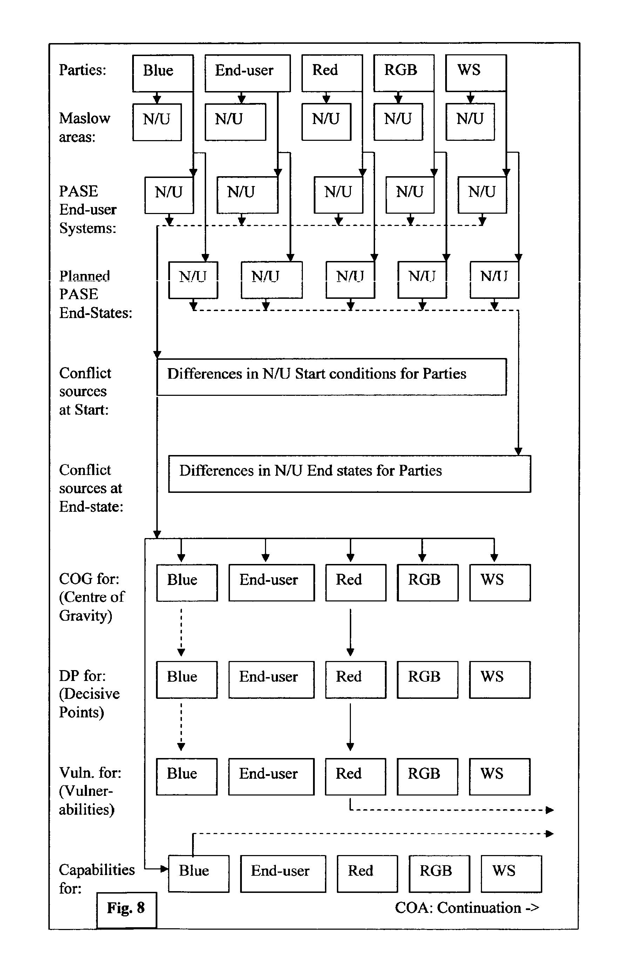

Examples on upper level structures are shown in Fig. 7, which upper part is shown in more detailed structures in Fig. 8.

### Introduction to DST-control part

DST-control part (Internal control system) has been related to the External control system and functions in an upper level system perspective. Here a description will follow with an internal perspective, which includes the structure and the design of stimuli and response in the said DST-controlled interactive process with the user. That matter will be discussed below with starting point at the system perspective "Organisation", which includes the use of a system and the human interaction.

Stimuli- and sensor- or detection units are using means, which are developed for interaction with the object; the man.

Example: A computer screen is a means to give stimuli. A keyboard, mouse and computer screen are examples on means to collect the human response.

The Goal/Plan-unit: It contains those structures of data-storage and processes, which define the work of the tool and which relate "stimuli and response" to respective box/file in the data-storage structure. That process corresponds to the "plan", which the control system will use in the interaction with the user with help from the stimuli- and response-packages.

The task of the stimuli-unit includes, having the man to react in the intended direction and with intended estimation factors. Therefore examples are shown how results look as a starting point. The presentation of the result should be simple to interpret and the Stimuli-unit generates continuous stimuli/support for a methodically work process towards the intended result.

Example: The user will tell a party's situation in a society and make comparisons with other parties' situations.

The user will at first receive help with a suitable structure for the society system. The structure includes a hierarchy with sub-systems. Then the user can select various areas of the society for describing the situation. The user should then be supported by:
- A structure, which present a number of related input boxes.
- Boxes for: Input of free text
- Boxes for: Input of parties with their profiles (see (B4) above)
- Boxes for: Grouping of selected interest areas (see (B2) above)
- Support for evaluation of the situation within the respective area and for the parties.
   o Support is given in the form of scales with estimation alternatives
   o Suitable graphics for support of input and presentation

The graphics should be simple to interpret/understand and often there is used vertical (or horizontal) columns drawn related to a scale. A mechanical analogy is the abacus (strings of beads on a frame), where sections of beads can be compared with each other and a mounted scale.

Various considered results of an event or an action can be related to each other, by using a horizontal scale (a ruler), where symbols of the said various results are put on respective considered values.

Example on a user task: To comprehend the situation within an interesting area. At an upper level the questions are of a more integrated nature, e.g. what is the hostile air combat capability? At a lower level the questions will be more detailed, and the question can e.g. regard the number of objects, e.g. the distribution of tanks in various zones.

For the society system the questions might regard abstract notions, e.g.:
- The strength of religion for various groups of people.
- Attitudes to various society groups
- Corruption within the judicial system
- The opposition position and capability to drive change-processes
- Safety and health

The stimuli-unit will generate those signals and technical support, which manage the user towards the intended way of action.

One technical question is how the answer can be quantified for a continuous use of the information. We apply a technique with comparable objects with symbols, which the user positions on a given scale, and relates the estimated object values to the scale. Needed changes will be related to the same scale, and the user gets a value-based relation between the start-situation and the goal-situation, and a value-based difference, which is a measure on the effort of change, which can be included in the planning process. Further on, the effort of change is at lower levels related to valid capabilities of considered resources.

Example: A change of attitudes between a start-situation and a goal-situation is examined, and the situation-positions are related to comparable objects' positions. It is simplified if the comparable objects are well known. The topic situation might e.g. be placed at the value 3, relative to the comparable objects on values 1 respectively 8. The goal situation gets the value 9. We give the value-dimension the name "attitude value" = Atv. Then the effort of change is (9 - 3 =) 6 Atv. Various efforts with various resources are then estimated having capabilities to perform values relative to the Atv-scale. Efforts with resources, which together have the capability to handle the need for 6 Atv, might only have the probability of 50 % to do so. Often there is a need for larger probability of success, e.g. 75 %, and then there is a need for extra resources to be able to achieve success with that probability. Then one might need to start with resources for 8 Atv, and then one might decrease the resources at the end if it is possible.

The tool solves the user's problem to perform the said probability estimations. The stimuli-unit creates scales and symbols to be attached at the scale. The detection-unit reads the position of the various symbols and the processing unit calculates the probability values and put those in the structure for presentation and further use for integrated probabilities in the structure.

A second question is how to visualize the value measures and the comparisons of the "abstract" notions, which were exemplified above. The answer is with clear and simple graphics, i.e. avoiding putting extra requirements on associations via the graphics. We often use "columns", which are related to a scale and to each other. We exemplify with a vertical scale, where the height of the columns is decisive for the inherent differences. E.g. various parties' cultural situations are shown with columns side by side for close comparisons.

The clear column marking is encouraging for the quantification of complex and abstract subjects/parameters.

A mechanical analogy is the rows on an abacus, which rows can be compared with each other and with an adapted scale. Electronic sensors could read the raw values to the processor.

The advantages with the totally electronic design are also that the solution is easy to store, update and communicate electronically.

The stimuli-unit uses stored column diagrams as examples on what will be performed, and columns are also used as a basis for easy performed processing and result presentation. Another example on graphics is the division of a round "cake" into slices. It can be used to show various parties' relative parts of water consumption, military forces etc. Rulers are often used as estimation support tools, e. g. for relating alternative action results.

The technical solution is including adapted stimuli with graphics, in managing the user forward towards responses, containing estimations of selected parameters and factors within various areas. Those responses will then be used together with other responses to generate solutions on complex problems.

### Introduction to DST-application part

DST-structure part contains and relates the information, which DST-control part brings in from the user. DST-application part works on and with data in DST-structure part and includes:
- Structure related processes: Handling of defined structures with their respective internal relations and data
- Relation-processes: Handling of dependences between structures
- Value-processes: Handling of valuations and calculations DST-control part is handling the user interface for DST-application part

### Structure related processes

### Examples are:

- Party-based processes
- Maslow-inspired processes
- Society processes
- Need/utility
- Conflict sources
- COG-based
- Capability-based
- Resource-based
- COA-based
- Action-based

### Relation processes

### Examples are:

- Inter-structure processes
- Co-operation
- Synchronisation

### Value processes

### Examples are:

- Probability processes
- Game theory processes
- Balance processes
- Safety/Threat

Most of the processes in DST-application are shown in the structures in Fig. 7 and 8.
The processes above are described below in user examples

### Short about the invention

The present invention is a technical tool, which is supporting solution and accomplishment of complex tasks and processes, which primarily regard changes, creation of new systems, products etc. It includes a method for technical support of projects, where projects include processes for situation understanding, planning and execution, and where the task of the project is to change or develop at least a product or system from their start state to their end state. The method handles uncertainties in the project and provides users of the tool with probability measures for selected possible results within the project. The tool gives the user graphical support.

The invention supports the following process steps for performing a task of change:

### A: The basic situation and upper level solution

1. Composition and presentation of detected needs
2. Detected conflict sources
3. Composition and presentation of essential basic values of parties and belonging systems
4. Composition and presentation of goal for the task of change
5. Use of a system model for describing and handling of system changes
6. Use of the system model for handling of COG (Centre of gravity), and DP (decisive points), and Vuln (Vulnerabilities).
7. Composition and presentation of parties' capabilities, and especially capabilities where the opponent/party has vulnerabilities.
8. Composition and presentation of action alternatives (COA, "Course of action") to accomplish the task and achieve the goal of change.
9. Detection of possible results and presentation of COA with support of a specially created game-method
10. Detection of probable result of COA

### B. System hierarchy and relations

### 1. Subdividing of efforts within subsystems

### Example: Fig. 7

The technical support includes:
- Created graphics for support of input
- Created graphics for presentation
- Created method for detection/handling of input data, and in some cases transformation of input data from a first parameter system to a second parameter system, and presentation of the new parameters belonging to the second parameter system.
- Created graphics for the system model and its use

The said transformation from a first parameter system to a second one implies a surprising technical effect. However more important is that it solves a qualified problem for the users of the invention.

### Example of a use case:

The user will perform a task in the form of a project or an operation. The End-result will be a change of a system, S, in the society from a start-state, SS, to an end-state, SE.

First the user needs support for examining and structuring what he will do, and receive support for planning the execution, before he starts the execution with help of the tool.

He needs SU, situation understanding, at first SU for the start-state and then later on feed-back from system changes during the execution, for a successive adaptation of the Plan to the present updated SU.
a. The tool manages the user through the process steps (1 - 4) above and obtains a suitable state, SE, based on needs and possible conflicts/consequences for other parties or systems.
b. The tool manages the user through the process steps (5 - 8) above and obtains one or more alternative principal ways to perform the changes in the system from SS to SE.
   The solution consists of detection of relatively simple/cheap "ways" for achieving essential effects and matching those "ways" and corresponding areas against the own capabilities/resources within the corresponding areas.
c. The tool manages the user through the process step (9) above and obtains a ranking between different alternative COAs and obtains a detection of probable results for respective alternative.
d. The tool manages the user through the process step (10) above for the selected COA and obtains a detection of the probability for success of the planned COA.

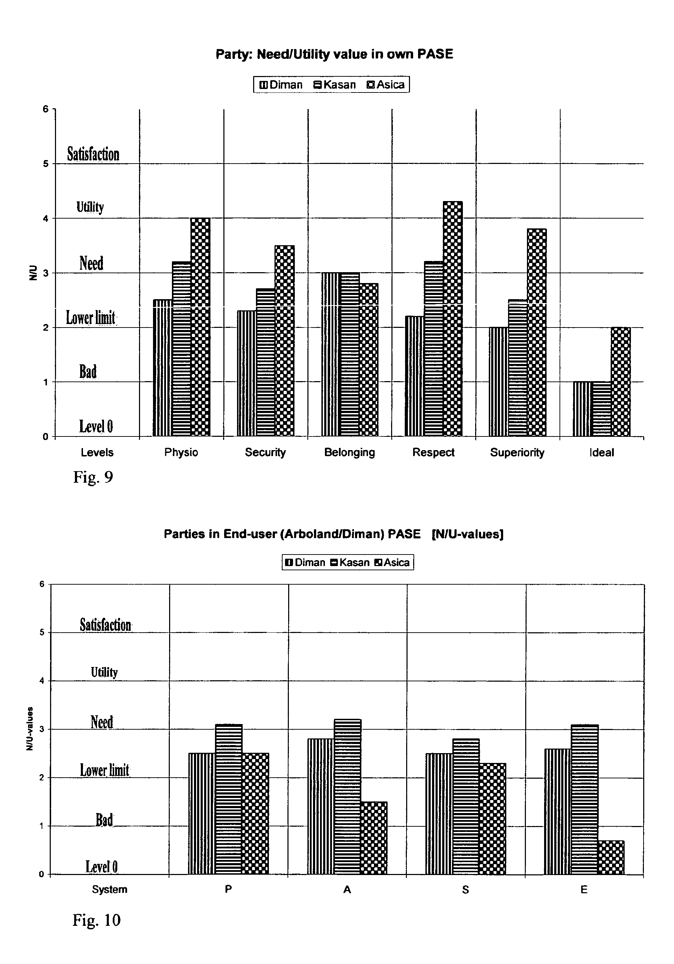

In (a) above there is presented graphics for the input, which contains scales, where the user positions respective needs in an area-oriented need-hierarchy, and position service levels in a system-oriented society-structure. Example: Fig. 9 and 10.

The tool compares start-states respectively end-states and delivers conflict sources with quantified values. The tool supports the selection of goal and goal-definition by a presentation of a weighting between the need- and conflict-levels.

In (b) above there is presented graphics for the input, which contains scales, where the user positions respective COG, DP (supporting basis) and Vuln., in a first system-oriented society-structure and a capability-oriented scale. Parties' own capabilities are positioned in a corresponding second structure and scale, and are matched against the values in the first structure.

The tool supports the selection of COA based on positive capability balance with use of small resources for the user.

In (c) above there is presented graphics for the input, which contains tables for various COA-alternatives for involved parties plus scales, where the user positions the respective result-alternatives for selected COAs.

The tool generates probabilities for selected COA.

The tool supports a composition of strategic COA.

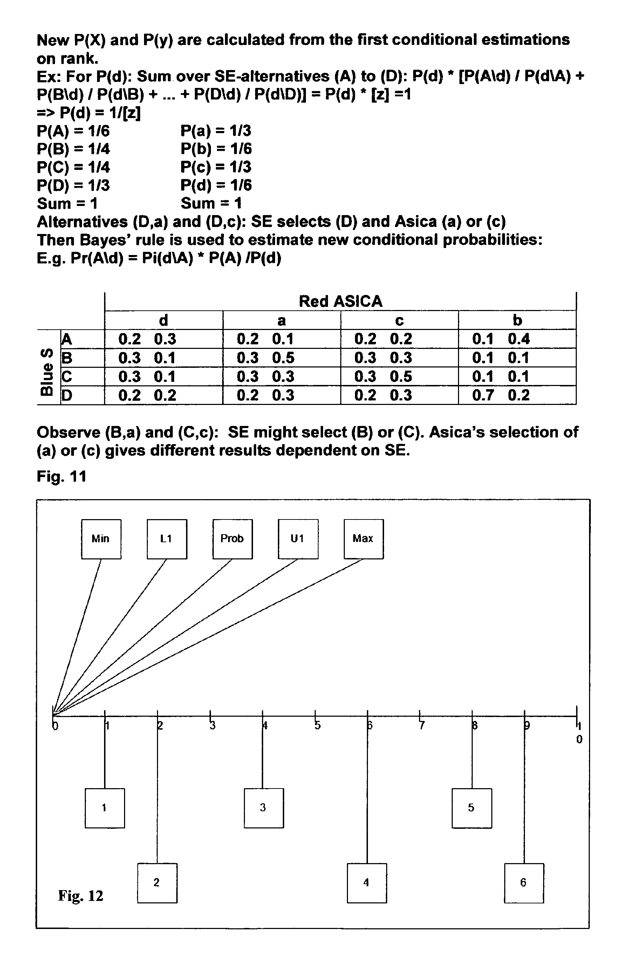

### Example: Fig. 11 and 12.

In (d) above there is presented graphics for the input, which contains graphical system fields, where the user positions the building blocks for COA:
- Symbols for the system start-state.
- Symbols for the system goal-state.
- Symbols for the system stage-state.
- Symbols for forces, which generate a system-state from an earlier state.

The forces connect states to each other.

Two base-perspectives are supported:
- State-symbols with text-information and lines/arrows in between.
- Force-symbols with text-information and lines/arrows between that force-symbol and the state-symbols before and after.

The two base-perspectives can be constructed on the same graphical system-fields.

### Example: Fig. 3 - 6

The connections between the system-states imply an execution-order for actions. They also imply logical connections, which contribute in the process of estimating probabilities for different COAs.

### Estimations of probabilities for achieving planned goals

That goal or stage-goal, which will be achieved according to a plan, implies a change of states from a first state to a second state.

Two types of states are defined:
- Single states of change (ES)
- Integrated states of change (IS)

IS consists of integrated ES. Below there is discussed, at first ES and then how several ES can be integrated to IS.

### Estimations of probabilities to achieve a single state of change (ES).

An action to achieve a planned ES might give rise to other states of changes due to involved uncertainties. For small uncertainties the probable result will be close to the planned result. The possible result-area is narrow. In other cases the result-area might be wider.

The technical tool uses graphics on a computer display:
- A value-based scale is presented.
- A number of possible results are put on the scale according to the operator's estimation/evaluation.
- The tool is estimating a probability-based result-area.
- The operator positions the planned result on the scale.
- The tool estimates the probability that the planned result can be achieved.

### Example: Fig. 12

### Estimations of probabilities to achieve an integrated state of change (IS)

States of change can be obtained in various systems or sub-systems. Successive ES within a sub-system can be integrated to an IS for the sub-system. ES within different sub-systems can also be integrated to an IS for the whole system. An Action, based on an ES within a sub-system, can give rise to ES within another sub-system.

The technical tool supports the integration of several ES, where those ES might be present in several different structures distributed on different sub-systems or systems.

The technical tool uses graphics on a computer display:
- The different systems/sub-systems are presented as fields, e.g. as horizontal fields on the display.
- The operator put successive ES into the respective sub-system field.
- The operator connects related ES with arrows (or another symbol) in that direction, in which the states of change would arise.
- The tool handles the structure of ES in the way they are related and positioned in the fields, and estimates the probabilities of the interesting IS.

### Example: Fig. 4 - 7 and 11

### Comments on the probability estimations

People in general have difficulties in handling probabilities. Therefore the tool supports the handling and estimations:
- The operator doesn't need to estimate probability parameters. It is supported by the tool. ES is handled in a value-based scale, where the operator's value estimations of various results are related. The tool supports the transformation of value-parameters to probability-parameters.
- The operator doesn't structure, integrate and calculate probability values to obtain the total probability of achieving a planned goal. That process is supported by the tool. IS is handled in a logical structure, where the operator's course of actions (COA) is reflected. The tool transforms the structure to a method of integrating probabilities.
- The probability values are a reflection of the operator's awareness of the reality and his planning for achieving his goal. In complex projects or operations in a complex environment, it is difficult to understand and master the involved uncertainties. If the tool would answer with a probability of 20 % on success of the operator's plan, and the operator had believed in (or wanted) 80 %, then the answer implies a message of a need for replanning.

### Detailed descriptions on probability estimations for achieving the planned goal

Estimations of probabilities for achieving a single state of change (ES) are described closer in (d) below. And estimations of probabilities for achieving an integrated state of change (IS) are described closer in (e) below. The format is claim-oriented.

### The invention includes:

A method for technical support of project, including operations, by use of a technical tool, where the project includes processes for situation understanding, planning and execution, and where the task of the project is changing or developing at least a system or a product, from the start-state to an end-state (the project goal) of the system/product, and thereby achieve stages in between (goal of stages), and where a single change from a first state to a second state is achieved by actions, and where the composition of connections of actions between the successive states including the stage-states in between, is an expression of the project course of actions, and where uncertainties exist about the project result or states, which can be achieved, regarding at least one of stage-goal or end-goal,
characterised by the method handling uncertainties in the project and supporting the user of the tool with probability measures for selected results within the project, and that the uncertainty includes at least one of the processes, situation understanding, planning and execution, and that the method of the tool includes graphical methods according to (a) - (c) below:
a. supporting input of information with graphical methods, and
b. handling input information and generating new information, where it is included transformation from at least one different parameter area to the parameter area of probability, and
c. supporting presentation of the said new information with graphical methods, and that the method steps in (a) - (c) are divided into two sub-processes (d) and (e) below:
d. estimating probabilities for achieving a single change between two states or stage-goals with support of graphics on a computer display, by
   d1. the tool graphically drawing a value-based scale with connection means, where symbols for different results can be attached, and
   d2. graphically drawing symbols for results with belonging notions and attachment means, where the symbols can be moved and attached on the connection means of the scale, and
   d3. graphically drawing forms, where the user can write information about respective result and which is connected to respective symbol, and
   d4. supporting the user with help-text or manual in performing the process, where the tasks for the user are:
      - describing at least three results in the said form: a realistic alternative for each direction of the scale, e.g. a best and a worst and a most probable, and
      - when needed adding further result-alternatives, and
      - positioning the symbol for a first result-alternative on the scale, e.g. the best alternative, and positioning symbols for the other alternatives in relation to the first one and to each other, and
      - the tool registers the scale-values of the symbols, and
      - selectively repositioning the symbol for the most probable alternative to a new selectable position on the scale, and then the tool adapts the positions of the result-alternatives on the scale and registers the new positions, and
      - the tool estimates a probability distribution adapted to the results of the registered positions on the scale, and
      - the user positions a first new selectable result, e.g. his planned result on the scale in relation to the earlier result-positions, and
      - the tool estimates and assigns a probability to the said first new selectable result, e.g. the probability that the planned result at least achieves the given position on the scale, and
      - the tool estimates uncertainty values, e.g. in the form of standard deviations, and
      - the probability values are presented with or without uncertainty values,
e. estimating the probability to achieve a second state or stage-goal from one or several first states or stage-goals, where is included a number of single change-steps and states positioned in between, and where the probability of single change-steps are estimated e.g. from (d) above, and the estimation is performed by help of graphics on a computer display, by
   e1. the tool graphically drawing one or several fields, representing system or sub-system, where symbols for various states can be put in, and
   e2. graphically drawing symbols for results with belonging notions and attachment means, where the symbols can be moved and positioned in belonging system field, and
   e3. graphically drawing symbols for connections between related state-symbols, and where the connections are representing the steps of change or forces or actions, which create change-steps , and where the connection symbols have attachment means for attachment to corresponding attachment means of the state-symbols, and thereby the tool can connect the state-symbols into one or several networks, and
   e4. the user is supported by the tool when putting the state-symbols in the fields and connecting those symbols with the connection symbols to the said network, and
   e5. the said network can e.g. be describing at least a part of course of actions, and
   e6. the tool estimates the probability to achieve the said second state, by the method step, calculating integrated probabilities through the said network, and
   e7. the tool presents the said estimated probabilities.

### The invention in an example of use

An application of the invention includes changes of the society. There might be mixed military and civilian efforts to help suffering groups of people in an area or in a country. The military efforts might be peace-keeping or peace-enforcing, making helps possible to be accomplished, and society-changes to be performed for creation of stability. It might be help for development countries, where various society-functions need to be created for investments to be successful and people being able to work and earn their living. It might also regard development of the western world of modern and complex societies, for further increase of wealth and safety.

When a society system is very complex, there are needed good system structures to work in. Otherwise it will easily become chaos, and what is done to improve at one place, will create problems at another place. We have found in literature a system structure, PMESII, which is used by military development organisations in US in planning of military operations. PMESII is a short for the areas of: Political, Military, Economic, Social, Information and

Infrastructure. That structure is not fulfilling our needs and requirements on good system design, e.g. there are common sub-areas within Economy, Information and Infrastructure.

We have created a society structure based on "PASE". Those PASE-systems are basic for human society development and a natural structure for human organisation of work processes and operations..

The PASE-systems consists of:
P = Political system
A = Attitude&Value-system
S = Security system
E = Economic system

P contains the Ruling/governing system
A contains Religious, Cultural and Social values, plus A&V regarding PASE
S contains the Military system and the Police system (The judicial system)
E contains most of what people do in the regular daily life.

We have also created a structure of Forces for changes of the PASE-system states. The Forces are based on, and have their energy from the respective system.

### The forces are DRIMPoB:

| | |
|---|---|
| D = Diplomacy | from P |
| R = "Ruling" | P |
| I = Information | A |
| M = Military | S |
| Po = Police | S |
| B = Business | E |

The forces obtain their energy from respective system. But they can be used to create changes also in the other systems.

More information about the PASE-system is given in the section "Applications and Systems" In the section above "Estimations of probabilities for achieving planned goals" the state-changes ES and IS are handled in systems or sub-systems. In this section the topic systems are the PASE-system. And those can be illustrated graphically in the said system fields and with successive ES connected by arrows, which can illustrate those forces which create the respective ES. E.g. Diplomatic efforts can generate political changes in the Political system or economic changes in the Economic system.

### Example: Fig. 1 - 7

In a fictitious society:
- The nation Arboland contains two different groups of people:
   - Dimans in the south area Diman
   - Kasans in the north area Kasan
      The groups of people are partly culturally different, have different religions, and the areas have had different economic development. Kasan is richer and dominates politically. Dimans have revolted, and fights between Dimans and Kasans have destroyed and paralyzed Arboland.
   - A powerful Western country, Asica, has got FN-mandate to create peace and stability in the area.

Asica develops goals and plans its operations. Diman and Kasan have their goals and plans, which Asica should consider.

Asica uses the present invention, "DST", "Decision Support Tool".

Asica will create a plan, which describes how the society (PASE) in Arboland will change for Dimans and Kasans. With starting point (SS) in the PASE-systems, via change-steps (ES) in between, the end-state (the goal SE) would be achieved, - a peaceful and stable PASE-system.

With the support of DST also the probability for the success of the plan is estimated. It regards single ES and the total IS.

### Start-states, SS, for the parties

The invention includes graphical support for positioning the three parties Diman, Kasan and Asica in *system-boxes* for respective PASE-system (in Arboland). The situation for each party is levelled against a scale. The causes for the differences are originated in various system states. Example: Fig. 10

An increased understanding for the parties is obtained by a graphical support for a "Maslow-inspired" method. The parties are here positioned in function-boxes for the respective six functions:
"Physiological, Security, Belonging, Respect, Superiority, Ideal", which is shortly named "PSBRSI". The functions have been ordered according to a rough need-hierarchy. A group's need can be described by a selection of the functions "PSBRSI", where a first function's need is prioritised before a second function's need, until the first function's need is satisfied up to a certain level/limit or/and its satisfaction level is significant larger than the second function's level. The scale is using a mark, "Lower limit", below which the interest for higher orders functions is small. Example: Groups of people, who are close to dieing from starving or thirst, prioritise food and water and have no energy for engagement in questions about global politics or democratic systems.

The studied situations should primarily regard the respective party's "home-society", i.e. for Asica the functions in Asica's PASE-systems are considered here.

The knowledge about the parties' "Function-relations" implies planning the changes in a good order and in an adapted way.

### Example: Fig. 9

The situation level on a scale can also be related to a party's needs. A larger need constitute a source for the party's desire to change the systems. Then various parties might put up different goals for the same society, and end up in conflicting interests.

The differences, shown as the parties' positions on the scales, constitute conflict sources. The causes of the differences and their sizes are an essential factor in planning state-changes in the PASE-systems.

The planned End-state (SE) needs to be analysed in a corresponding way as the start-state. It is a risk that the planned End-state even contains more or larger conflict sources than the start. Feedback about the conflict sources might make reasons for re-planning or re-examining the goals.

### Strategic planning and estimations on alternatives

Centre of Gravity (COG) designates a party's most valuable part, "the heart or the fundament" in the party's society-system (PASE). COG is extra defendable and other parts of the PASE-systems can have been formed as protection of COG. Also parts of the forces (DRIMPoB) can have been formed as protection of COG.

Decisive points (DP) constitute such support of COG, and in a hierarchy of sub-systems, a DP in a superior PASE-system can be a COG in a subordinate sub-system of PASE.

DP contains also those forces DRIMPoB, which are used as support for COG.

Vulnerabilities (Vuln) are those vulnerabilities, which exist in the structures of COG and DP, and thus also might be goals for an attack. Vuln might be vulnerabilities in systems and forces as well.

In a simple example COG can be described as valuable system states, DP as supporting forces and Vuln as vulnerabilities in the structure of the society system states and forces.

It is also worth knowing a party's COG, DP and Vuln at peaceful relations with a part, in order to avoid making problems and conflicts by mistake.

The invention generates graphical support for describing COG, DP and Vuln in terms of the PASE-systems and DRIMPoB-forces. Thus we have created a unified system-model and a society-structure for describing and handling corresponding processes and tasks.

The DRIMPoB-forces can be described in capability-terms and/or with functions and capacity.

The analysis of the parties' *needs and start-states (SS)* together with the analysis of *COG, DP and Vuln* are essential foundations for the strategic plan.

So far in the planning process Asica has probably several action-alternatives for selections. The same is reasonably valid for the other parties. The action-alternatives are also related to each other, causing the ranking of a part's alternative to be different depending on the opponent's choice of alternatives.

### A proceeding method to the game-theory concept

For the continued handling of the planning process a method has been created, which has been inspired by "Game-theory". A first moment contains a game-theory ranking of alternatives and analysis of the "Nash-equilibrium". A number of tests have shown that the process so far has been insufficient, dependent on the complexity of the tasks, and the uncertainty of the estimated results.

Therefore a second moment has been added, where probability estimations are included. The first moment is used to find and pick out interesting alternatives, for a continuous analysis in the second moment.

The second moment contains partly the corresponding probability estimations as in the section above: "Estimations of probabilities for achieving planned goals".

Thus the tool estimates the probable result-area and the probability to achieve the given results, based on the operator's valuation of possible results/outcomes.

### Example: Fig. 11 - 12.

The created method also opens new possibilities. The various combinations of the own action-alternatives, related to the other parties' action-alternatives, are forming varying result-areas. The information about those result-areas and probabilities of the included good and bad outcomes, can be used to create a new solution, which is based on a strategic combination of own actions.

The method thus is not limited to searching the best own action-alternative. But the largest advantage of the method is the possibility to find a combination of own actions, which has a significant larger probability of success than the best of the originally assumed action-alternatives. Conclusion: A complex problem might need a complex solution and this method is a way to find it.

The tool is supporting the strategic planning process with graphical support:
- Forms for describing outcomes
- Value-based scales for positioning outcome-symbols.
- Forms for describing dependences between different action-alternatives and their outcomes, including focus on the worse part of the outcome-area.
- Forms for describing actions, which "break dependences", which otherwise lead to worse outcomes. Example on action-packages:
   * Series or parallel scheduling of added actions
   * At given criteria the present action will be interrupted and replaced by a prepared alternative.
- Value-based scales for positioning of outcome-symbols of the new action-packages.
- Putting the new system-changes (ES) into system-fields and estimating the total probability for the new IS.

### Example on use:

The parties above: Diman, Kasan and Asica have each three different action-alternatives (a, b, c) in the present situation, e.g. Diman has (aD, bD, cD). The alternatives have e.g. varying degrees of military violence.

In method-step 1 the alternatives (a,b,c) are introduced for every party in a table-frame. There are square-boxes in the table for each combination of the three sets of (a,b,c), where the ranking of alternatives is entered. The conditions for "Nash-equilibrium" are examined.

We have found that e.g. military cases often contain such large uncertainties that the estimations become different. It can be explained by a large outcome-area e.g. (x, c, b), which will be ranked. For x = a, the outcome might be very good, but also very bad, and the corresponding is valid for the action-alternative x = b and c. The outcome-areas are overlapping, and which alternative is the "best" depends on how things would turn out in reality, i.e. where in the outcome-area the outcome would appear. The ranking however depends on the estimator's present perspective and it might shift.

Therefore we have created a method-step 2, where we introduce probabilities to handle uncertainties.

Possibly a first approximate probability estimation can be made using basic theory for probability and "Bayesian" probability.

P(A\c) * P(c) = P(c\A) * P(A) = P(A,c), where A and c are objects, which are true or false with certain probabilities P(A) and P(c)

According to Bayes' theorem:
Pr(A\c) = P(c\A) * Pi(A) / P(c), where Pi(A) is the probability for A before c happens and Pr(A\c) is the probability after.

The ranking might be transformed to probabilities based on an assumed relation between ranking and probability. Then dependent probabilities e.g. P(x\ c, b) are obtained. The transformation algorithms would be dependent of the design of the ranking rules.

New dependent probabilities can be up-dated by use of "Bayes' law". The tool can calculate probabilities directly from the user's estimation of ranking.

### Example: Fig. 11

Method-step 2 is exemplified in the following.

One party marks on a value-based scale a set of possible outcomes, good and bad. Those outcomes form comparison objects for those outcomes, which the user will value and position on the scale.

The user can make a set for Diman, a set for Kasan etc. They need their own sets, because an outcome, which is advantageous for one party, usually is bad for an opponent.

The user studies the interesting action-combinations e.g. (b, a, b), where the outcome for Diman is estimated. What is the best outcome and what is the worst. Also what is the most probable can be marked. Corresponding valuations are done for Asica and Kasan. The tool calculates averages, σ-values (standard deviation) and presents a probability-based outcome-area.
- The probability analysis generates an increased content at the selection of action-alternatives. The original ranking-method in game-theory is often insufficient.
The probability-analysis also creates possibilities to realise new ways of acting than only the choice between three action-alternatives.
One can e.g.:
- Start with one alternative for a time period and then transfer to a second alternative
- Drive two or parts of two alternatives in parallel
- Stop an alternative at an earlier stage, when the development indicates a worse result.

In summary the invention generates possibilities to create a strategy by combinations of several actions and to value/probability-estimate that combination. Thereby the probability of success can be significantly increased.
- The tool delivers the scale and symbols for marking the user's alternatives.
- The tool calculates averages, σ-values and presents a probability-based outcome-area.
- The tool generates alarms at risks for bad results; the probability being above a certain threshold for an outcome below a certain value-level.
- The tool estimates the probabilities of the single action-alternatives.
- The tool estimates the probabilities of the created strategic combinations of several action-alternatives or ways to act.

### Applications and Systems

In the example above a military application was presented and the use of the society PASE-systems. The invention is useful for other applications. Changes in organisations, e.g. companies or associations can be handled in a corresponding way. People tend to organise their operations and act in similar ways also in a smaller scale.

The PASE-system reflects the Society-system, and there are corresponding systems for e.g. a boat-club or an ordinary association. The system can be named MASO and corresponds to PASE as below:
- P corresponds to M. Management (or the board), which is running the daily (internal) operation, possible with help of committees etc. The force corresponds to Ruling. The external relations correspond to Diplomacy.
- A corresponds to A. The association and its members have common values regarding the purpose of the association etc. Information is spread within the association and externally.
- S corresponds to S. The association and its members need protection externally. Locks and guards correspond to the external Security system (compare Military). Rules and charter with punishment, e.g. exclusion, correspond to the judicious operation of the society.
- E corresponds to O. The operation of the association (The Economic system) implies both internal and external business.

It is easy to see that also company operations and organisations fit the said system structure. The systems, MASO, according to above, can be considered as general systems for the human way of organising and acting together.
PASE is a general expression, which regards our societies, nations etc. There a P is an M, i.e. a political management. And E is an O. The Economic system E includes the operations of the society. Example: Fig. 1 - 3

Another type of change-projects regards product development, e.g. development of cars, airplanes, management systems, etc. A car-system is a plain technical system and there is no MASO-system internal in the car-system. The car-system contains no business operation. On the other hand the car is made for use and then it is included as a resource in an operation. The operation is Transport. Also a private family-car is a resource. It is included in the family's transport operation.
The MASO-systems are suitable for transport companies, as they are for other companies. A family's transports are also suitable for the MASO-systems, - also if all parts wouldn't be that formally adapted. There are Management, Security, Attitude&Value and the operation (Economy).

It is included as an aspect of the invention that product development can and should be seen as a development in the MASO-systems. Then one includes the use/operation and the importance of the product in a natural context. Then one understands what functions the car should have, what are important and what one can prioritise in a benefit-cost analysis. Technicians often are criticised for designing products with too little focus on the users' needs and too much on the internal technique and performance.
There are great advantages in using the created MASO system perspective:
"A MASO-system perspective on the product as a resource with capabilities in the systems". It is not only valid for the product developer. It is also valid for the product purchaser. He buys something, which influence and change his MASO-systems. He should be aware about how his systems are changed. Preferably he should have analysed that before he decided which product he will buy. He is not buying an isolated technical thing. He buys a resource in his MASO-systems.

The conclusion is that the invention can handle many applications, which implies changes of operations. We haven't yet found any example, which shouldn't fit into the MASO-perspective and the analysis functions, which are included in the invention.

### Example: Fig. 2 and 6 - 7

Especially we emphasize the needs at complex operations. Here might be included large organisations and large projects. We have selected military operations as an example for several reasons:
- Military operations influence the society systems, and those are large and complex.
- Military operations contain violence and the effects are often dramatic and evident.
- Military operations have long been one-eyed focused on the special fight-moment. But at present, politicians have got an increased understanding for other aspects. A new introduced view is: "The important matter is not winning the war. It is winning the peace."
Then the MASO- or more specific the PASE-systems become very important.

The invention is especially valuable at complex situations. Then the support is needed much for understanding and selection of the right actions. There is a need for a support, which handles complexity and helps decreasing it for the involved people. That is made by the system structure MASO or PASE, which support in breaking down business and operations into less and manageable packages.
If the system-basis would be erroneous or unsuitable, the complexity would instead increase and chaos might arise. US military e.g. has suggested a system PMESII, as useful in its modem method development, e.g. for "Effects Based Approach Operations, EBAO". That system structure cannot fulfil our requirements, among other things there are included several similar sub-systems or operations in several PMESII- system. The systems E, I, I and partly S overlap or penetrate each other. The effect is that activities in E, I, I are colliding with each other and there would be chaos-consequences in the systems.

### Short description of Figures

**Fig. 1****:** Change/development of the society systems
   - The upper part shows the principle: The society produces services. Different parties might have different needs or receive different amounts. Parties will change: They "understand" the situation, plan changes and execute actions for changes. Feed-back is obtained via understanding, possible corrected plan etc..
   - The lower part shows the process: The society is developed from a Start-state described in the PASE-systems, with help of DRIMPoB-forces to a new PASE-state.
**Fig. 2****:** The MASO-system structure with belonging forces.
   The MASO-system forces can be more specifically defined for respective defined organisation etc. For simplicity we note the forces in the same way in the MASO-systems as in the PASE-systems:
   - M (P): manage (control/rule) internally with the Force R, and "negotiate" externally with the Force D.
   - A: The Force I is used for information internally as well as externally
   - S: The Force Po watches the following of laws and rules internally, and M is protecting externally.
   - O (E): The Force B is used in actions in the operations internally as well as externally.
**Fig. 3****:** The PASE-system structure with belonging Forces
   The Forces are specified here:
   R = Political Ruling (government, parliament, counties, cities)
   D = Diplomacy
   I = Information
   Po = Police (judicious operation)
   M = Military
   B = Business
**Fig. 4****:** Changes/Development of the society in the PASE-systems.
   The Development/Course of action, (COA), is illustrating how Actions with Forces (arrows) create changes/states (boxes) in the different PASE-systems (the fields). The essential start-states are described for each system (X:Start), as well as the planned end-state (X: End state).
   Often also a composed/"visionary" End-state
   (A corresponding picture, S:PASE, is describing changes in the S-system perspective. It consists of a S-selection of System-states and Forces of the PASE-picture.)

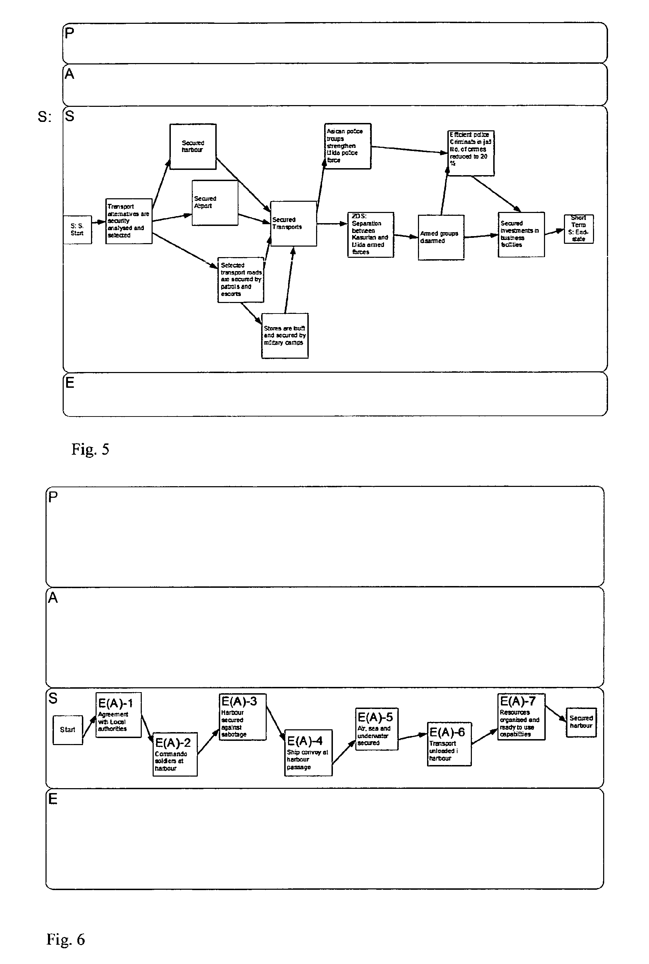

**Fig. 5****:** Changes/development of S:S.
   The picture is the selection of S:PASE, which is handling the S-aspects in the own system S.
**Fig. 6****:** Actions for changes in "Action-Phase".
   A Force-arrow or Action in S:S is exemplified in detail in 8 "Sub-actions" with "box"-symbols. The vertical lines are Effect-symbols. The pictures in Fig. (4) and (5) are illustrating the Effects as "box"-symbols and the Forces as arrows/lines. It might be suitable to select the "box"-symbol for what one wants to focus on (Effects or Actions).
**Fig. 7****:** It is showing an example of a process-structure for development of a plan.
   If the MASO-systems are changed to PASE, there would be obtained an example of a plan, which can contain military operations, which are indicated with X = S and military Actions in S:S. The described processes in the invention are mainly included in a corresponding process-structure.
**Fig. 8****:** It is showing examples of more detailed related structures in the upper part of Fig. 7. The tool-processes follow the structures.
**Fig. 9****:** A Maslow-inspired need-structure.
   The Example is illustrating N/U for three different parties within PSBRSI (in the home-nation of the respective party).
**Fig.10****:** N/U within PASE for three parties (as above).
   In this case N/U is considered in the Society-systems PASE (in End-user's nation). The example illustrates the start-state. The corresponding picture can be given for the planned end-state and stages in between during the process. Differences between the parties might constitute conflict sources.
**Fig.11****:** A further developed method-step added to "game-theory", which are created for complex and/or uncertain situations.
   A simple example with only two parties is shown in the Table: Blue has the alternatives (A, B, C, D) and Red has (a, b, c, d). After a condition-based ranking a probability-transformation can be done. A more comprehensive probability process is performed according to the invention, in connection with an analysis of the outcome-area for the different alternatives.
**Fig. 12****:** An example of a stage in the probability-process.
   On a scale there are marked "the best" (Max) and "the worst" (Min) outcomes of an action-alternative together with possible comparison-outcomes, (here: U1 and L1) and possibly an estimated "most probable outcome" (Pb). The method is used for probability-estimations of single steps ES at estimations of COA, and in processes according to (Fig. 10). There several alternatives are common. The numbered boxes (1 - 6) contain the valuation: Terrible, Bad, Critical, Good, Very good, Excellent.
**Fig. 13** The External control-system
   The Goal/Plan-unit receives its content from the Internal control-system (Fig. 14). The control system gives control-information for changes in the considered real system based on the Goal/Plan.
**Fig.14** The Internal control-system (DST-control part)
   The Goal/Plan-unit contains structures and processes for the operation of the tool. Stimuli- and detection/response-units are interacting with the object: "The user". The resulting solution of the complex task is included in the Goal/Plan-unit of the External control-system, where it will be performed in the reality.

### Graphics in Figs

The graphics of the tool are designed in colours. The colours make the graphics more clear and it is easier to see and follow the relations in the graphics. However patent-rules prescribe black/white in figures. The systems PASE and MASO are illustrated in the tool with e.g. the following colours:

| | |
|---|---|
| P and M: | Blue |
| A: | Yellow |
| S: | Red |
| E and O: | Green |

In the Figs. 4, 5 and 6 the PASE- and MASO-fields are shown with e.g. the colours above, while the boxes in the fields have respective colour in a lighter tone. The boxes include text-information, as illustrated (here the information is suppressed).

The Figs. 9, 10 and also11 are illustrating the Parties with their respective colour. E.g. the opponents, Diman and Kasan, have blue respective red colour, while Asica has yellow colour. When there are larger numbers of parties involved, more of the RGB-scale can be used, e.g. friends can be given variations of blue tones, and opponents red tones.

### Basic structures in the technical system solution

The system MASO or PASE are created as structured models of organised human activities/operations. The PASE-systems are reflecting the society development since time immemorial (e.g. the hunting society) and should function for the foreseeable future.

The technical tool requires defined structures to perform its tasks. PASE has sub-ordinate system-selections of the type X:PASE, where X = one of PASE, e.g. S:PASE, which in its turn can be sub-divided into PAE<-S and S<-PAE. In PAE<-S changes are performed in the S-system, which operationally supports superior change-activities in the PAE-systems. In S<-PAE the relation is the opposite. S:PASE has a S-perspective on PASE and handles the selection of system-changes, which has definite S-relations. Sub-ordinate system-selections of X:PASE are of type X:X, e.g. S:S. Those system-selections handles operations, which can be handled in the own system. E.g. it might be military operations in the Military sub-system of S. Those operations can be further detailed in what is here named "Action Phase" and which consists of defined military actions with defined resources to achieve defined military goals. More comprehensive actions can be "broken down" into sub-actions or co-ordinated activities.
The sub-division above is based on an operational perspective, which is central from a matter of change.
There is also a sub-division into sub-ordinate systems or sub-systems, where e.g.
A contains the sub-systems: Religion, Culture and Social values, and A&V regarding the respective PASE
S contains the Military system and the Police system (Judicial system)
E contains most of the human being activities in the daily life, and has a wide area of sub-ordinate systems and structures.
P contains the managing system with e.g. the structures: Government, parliament, counties and cities.

The sub-ordinate systems can have their sub-ordinate systems. How far the subdivision will continue depends on the topic problems and operational needs. The sub-systems should also be delimited, - in the same way as said for the PASE-systems.

In connection with military operations, which are involved in society-changes, there is a natural work-distribution according to the sub-divisions above. It implies that far down the structure there are actions (in the Action-phase) sub-divided below different PASE, which shall be co-ordinated, e.g. a Diplomatic action and an Information-action, which shall be done before an Economic pressure ("business-action") before a military action. There is a need for co-ordination/synchronisation of separate system-operations on all levels. Therefore there is created an extra operation-dependent structure, which relates different actions to each other with specified types of dependences.

The technical tool handles the system-superior dependence-structure and generates e.g. alarms, observation points and decision-points connected to the respective planned action or state. The presentation can be made in the form of a synchronisation matrix.
The technical tool also keeps together the system-related dependences. There exist connections between successive system-changes in and between system-fields.
There also exist connections hierarchically (parent to children) between the systems, i.e. between states at different system levels.

It is clear that there is not needed a larger complexity until the human mind cannot any more handle all parts and relations in and between different systems. Such complexity is a task for a computer-based technical tool, a decision support tool. The tool solves the complexity by supporting the break-down of system-complexes into smaller and manageable "packages". The tool DST supports the construction of the system according to the created model with the created structure. The packages build together larger building blocks, which in their turn are included in systems, etc. For the function of that totality, there are conditions that an action for a change in a package together with a change in another package will perform right changes through all relations and at all system levels. Thus there is a requirement for a well developed system-oriented structure. It is realised that smaller errors in the structure-basis can generate larger and even catastrophic failures in the system-appearance.

The DST is using the created model and structure for more functions than keeping together the small parts in the right way. Another function is to handle probabilities for success of operations. The probability for single changes ES can be used and integrated according to the given structure to a total probability for larger and more complex operations..

An essential part in the technical solution is the creation of the PASE-systems with belonging structure and sub-system. Each system is included with its own profile and base-characteristics. Those are handled by DST and the created graphical construction.
The created graphical symbols are used in the construction of:
- The structure of basic systems
- The Systems
- The System states
- How a new state can be created from an earlier state in the systems.
- Forces and resources for changes of states
- The structure of successive states in time and causally
- The structure of top-down/superior system perspective and "break-down" into sub-ordinate system-structures and changes of states.

The created system-design PASE is fulfilling the requirements on a system-oriented model of the real society. The "break-down" and the build-up of the system are made in accordance with the created structure with the graphical symbols. Thereby the given relations can be used for several applications. Probability estimations can be made using a network of connected complex society states.
Extra dependence-relations can be applied between different processes in a plan, and be utilised together with the basic structures in the execution.

For performing defined changes of something, there are needed defined resources with enough capabilities. The changes should be noticeable and in principle being measurable. PASE is a system-structure, which is used technically to handle information, positioning it in the structure boxes, and utilising the relations in the structure.

### Applications of the invention

The invention is a means and a method for solving complex tasks. The complexity concerns matters of several involved factors related in several ways. The patent application describes essential methods for handling complexity in tasks, in solutions and in execution of the solution. It is in the nature of complexity that various tasks can contain varying parts of a complex reality. The patent description therefore cannot cover all kinds of cases completely, and it cannot be made closely bounded for every complex task. It would simply be impossible.
The patent application is a technical tool supporting users at the solution of complex tasks. Then the tool supports a number of essential processes and fundamental methods. If there would be further questions or details, those are left for the user to be answered. Often such questions can be answered by similar concepts, principles and methods as those presented in the patent application.
The tool can also contain support for a question or process, which is not contained in a specific task. The user can always select not to use support parts, which is not needed. Various users also have various backgrounds and experiences. An experienced user within one area can e.g. "fetch" a known solution-part from his experience and then leave out those processes, which the tool supports to achieve the said solution-part.
The patent claims should consequently not be interpreted in such a way that every detailed point must be fulfilled in every various type of complex task. In some claims there are especially written that it is enough that a selection of the contained points are fulfilled. That condition would be implicit also for other claims, i.e. they should be considered valid, when the respective claims are fulfilled to an essential degree.

It is a purpose of the inventor that a person skilled in the art should understand and use the patent description and the claims in such ways as said above. Thus the patent applied tool is useful for large number complex tasks of various characters, - also within areas which are not explicitly mentioned in the application text.

## Claims

1. An electronic system for solution of complex tasks together with one or several users, comprising,
a. a system consisting of two connected control systems, an External control system and an Internal control system, where the External control system operates on its control-object, which is those external systems, where the solution of the complex task will be implemented, and where the Internal control system operates on its control-object, which is the user, for creating the complex solution for the External control system, and where each control system include three units,
b. the Input-unit, the Goal/plan-unit and the Output-unit, where the Goal/plan-unit contains a plan-information, which manages the operation of the control system, and where the Output-unit generates stimuli according to the said plan-information, and where the control-object reacts on stimuli, and where the Input-unit receives responses, corresponding to the reaction of the control-object, and where
c. the External control system's Output-unit can include control-means or actions adapted to the said external systems, and the Input-unit can include sensors or receiving means for measurements or reports regarding changes in the said external systems, and
c1. the External control system's said plan-information includes the solution of the complex task, and can include a goal, which is the control-goal of the External control system, or for complex solutions, where the said plan-information includes a plan with stage-goals or structures of processes with respective result-contribution, and
d. the Internal control system's Output-unit can include stimuli via (computer) screens or other signal-displays adapted to the user, and the Input-unit can include receiving means for responses via computer-means, key-board, mouse, display etc., and the responses can include the user's result of work related to the stimuli, and
d1. the Internal control system's said plan-information includes First structures for managing the control-process with the user, and includes Second structures with storing files/boxes,
which receive and store response-data, and where selected parts of the Second structures with response-data also are included in the plan or structures of processes, which are included in the External control system's plan-information.

2. An electronic system according to claim 1, comprising an electronic system of a technical tool, which gives support to users, where the Internal control system's Goal/plan-unit includes a number of structures, which obtain information at the interactive operation with the user, and where
a. a first structure is a basic structure containing at least one of the structures in (a1),
a1. structures for parties, structures for the external control-object, Maslow-inspired structures, N/U-structures (Need/Utility) and composite structures of at least two of the above said structures, and
b. a second structure, which also can use information from (a) and which contains structures for at least one of the structures in (b1),
b1. structures for conflict sources, COG, capabilities and composite structures including (a1), and
c. a third structure for COA, which also can use information from (a) and (b), and
d. where information brought to the COA-structure, after possibly further handling, is included in COA, i.e. a plan, which is a structured solution on what and how the complex task can be solved, and where the structured solution can be used according to at least one of (e1) and (e2),
e1. the complex task can consist of bringing forward one or several alternative solutions according to (d), and use those solutions for theoretical evaluations,
e2. the structured solution is implemented by the External control system.

3. A technical tool according to claims 1 or 2, comprising further handling of COA according to a number of COA-structures in at least one of (a) and (b - c)
a. COA according to claim (2d), where the further handling includes at least one of the following structured processes: security analysis, developed game-theory and probability analysis, and thereby COA is refined into new versions, and
b. hierarchical structuring of COA into at least one of the levels in (b1 - b4),
b1. COA process for the upper level MASO (or the corresponding PASE), which can be broken down with focus on one of M/A/S/O and its relations to the rest of M/A/S/O according to (b2)
b2. a COA process for the "middle-level", X:MASO (or the corresponding X:PASE), which can be sub-divided with focus on one of M/A/S/O within its own system area according to (b3)
b3. a COA process for the lower-level X:X (or the corresponding for PASE), and where
b4. the selected X:X effect is further handled in an Action-phase, which is structured in sub-actions, which are included in the plan and belongs to the action- or execution-level, and
c. where the relations between objects on different levels are included in the hierarchical structure and make possible a number of functions, which are based on relation- and value-processes.

4. A tool according to some of claim 1 - 3, comprising the Internal control system's Goal/plan-unit containing processes, which are operating on structures with data according to at least one of (a - c):
a. at least four of the structure-related processes including structures for:
a1. parties, Maslow-inspired need-systems, society-systems, need/utility, conflict sources, COG-system, capabilities, Resources, COA, Actions
b. at least one of the relation-processes including structures for:
b1. dependences between structures ("Inter-structure processes"), co-operation, synchronisation
c. at least one of the value-processes including structures for:
c1. probability, game-theory, balance of opponent's capabilities, security/threat

5. A tool according to some of claim 1 - 4, comprising the action-phase containing structures for at least two of (a - e)
a. actions and sub-actions, and
b. capabilities and resources, and
c. valuation with game-theory and probability, and
d. resulting project-plans/time-plans and synchronisation-matrix, and
e. dependences between structures in (d)

6. A tool according to some of claim 1 - 5, comprising stimuli and response-packages being adapted to belonging data-files/boxes in the storage-structure for the selected structures in the Internal control system's Goal/plan, and stimuli- and response-packages being designed with graphics supporting the user's interaction with the tool

7. An electronic system including a tool, which supports the user in solving complex tasks as development/design of projects (including planning) and/or management of project execution, including operations, where the project includes processes for situation understanding, planning and execution, and where the task of the project is changing or developing at least one system or a product, from the system/product start-state to an end-state, the project goal, and thereby achieves stages in between, stage-goals, and where a single change from a first state to a second state is achieved by actions, and where the composition of connections of actions between the successive states, including the stage-states in between, is an expression for the project course of actions, COA, and where uncertainties exist about the project outcome or states, which can be achieved, including at least some of stage-goals or end-goal, comprising
a. the tool's Internal control system (according to claim 1) handling the solution of the task, (here development/design of projects), and
b. if the project is selected for execution, the tool's External control system (according to claims 1) handles management of the project, and in case of plan-changes the Internal control system can be used for changes in the External control system, and the users can be different in (a) and (b), and
c. the tool handles uncertainties in the project and delivers probability measures for selected outcomes within the project to the user of the tool.

8. A tool according to some of claim 1 - 7, comprising the tool handling uncertainties in the project and supporting the user of the tool with probability measures for selected outcomes within the project, where the uncertainty includes at least one of the processes, situation understanding, planning and execution, and the tool includes graphics according to (a) - (c) below:
a. supporting input of information with graphical methods, and
b. handling input information and generating new information, where it is included transformation from at least one different parameter area to the parameter area of probability, and
c. supporting presentation of the said new information with graphical methods, and that the steps in (a) - (c) are performed according to (d),
d. estimating probabilities for achieving a single change between two states or stage-goals with support of graphics on a computer display, by
d1. the tool graphically drawing a value-based scale with connection means, where symbols for different results can be attached, and
d2. graphically drawing symbols for results with belonging notions and attachment means, where the symbols can be moved and attached on the connection means of the scale, and selectable (d3) and/or (d4)
d3. graphically drawing forms, where the user can write information about respective result and which is connected to respective symbol, and
d4. supporting the user with help-text or manual in performing the process, where the tasks for the user includes a selection of the following activities in (d41) - (d50):
d41. describing at least three results in the said form: a realistic alternative for each direction of the scale, e.g. a best and a worst and a most probable, and
d42. when needed adding further outcome-alternatives, and
d43. positioning the symbol for a first result-alternative on the scale, e.g. the best alternative, and positioning symbols for the other alternatives in relation to the first one and to each other, and
d44. the tool registers the scale-values of the symbols, and
d45. selectively repositioning the symbol for the most probable alternative to a new selectable position on the scale, and then the tool adapts the positions of the result-alternatives on the scale and registers the new positions, and
d46. the tool estimates a probability distribution adapted to the results of the registered positions on the scale, and
d47. the user positions a first new selectable result, e.g. his planned result on the scale in relation to the earlier result-positions, and
d48. the tool estimates and assigns a probability to the said first new selectable result, e.g. the probability that the planned result at least achieves the given position on the scale, and
d49. the tool estimates uncertainty values, e.g. in the form of standard deviations, and
d50. the probability values are presented with or without uncertainty values,

9. A tool according to some of claim 1 - 8, comprising the tool handling uncertainties in the project and supporting the user of the tool with probability measures for selected outcomes within the project, where the uncertainty includes at least one of the processes, situation understanding, planning and execution, and the tool includes graphics according to (a) - (c) below:
a. supporting input of information with graphical methods, and
b. handling input information and generating new information, where it is included transformation from at least one different parameter area to the parameter area of probability, and
c. supporting presentation of the said new information with graphical methods, and that the steps in (a) - (c) are performed according to (e),
e. estimating the probability to achieve a second state or stage-goal from one or several first states or stage-goals, where it is included a number of single change-steps and states positioned in between, and where the probability of single change-steps are estimated e.g. from claim (8) above, and the estimation is performed by help of graphics on a computer display, by a selection of (e1) - (e7),
e1. the tool graphically drawing one or several fields, representing system or sub-system, where symbols for various states can be put in, and
e2. graphically drawing symbols for states with belonging notions and attachment means, where the symbols can be moved and positioned in belonging system field, and
e3. graphically drawing symbols for connections between related state-symbols, and where the connections are representing the steps of change or forces or actions, which create change-steps , and where the connection symbols have attachment means for attachment to corresponding attachment means of the state-symbols, and thereby the tool can connect the state-symbols into one or several networks, and
e4. the user is supported by the tool when putting the state-symbols in the fields and connecting those symbols with the connection symbols to the said network, and
e5. the said network can e.g. be describing at least a part of course of actions, and
e6. the tool estimates the probability to achieve the said second state, by the method step, calculating integrated probabilities through the said network, and
e7. the tool presents the said estimated probabilities.

10. An electronic system including a tool, which supports the user in solving complex tasks as development/design of projects (including planning) and/or management of project execution, including operations, where the project includes processes for situation understanding, planning and execution, and where the task of the project is changing or developing at least one system or a product, from the system/product start-state to an end-state , the project goal, and thereby achieves stages in between, stage-goals, and where a single change from a first state to a second state is achieved by actions, and where the composition of connections of actions between the successive states, including the stage-states in between, is an expression for the project course of actions, COA, and where various groups of people have different situations, dependent on how the society system states suit the various groups, and where the tool comprises
a. a system model, which is used for the society systems, where
a1. The society systems consist of the PASE-systems: Political-, Attitude&Value-, Security-, and Economic system,
a2. changes in the PASE-systems are performed by the said actions utilizing the forces DRIMPoB,
a3. the project course of action, COA, is described by successive changes of states in the PASE-systems, and
b. the technical tool is supporting the creation of COA by support of graphics on a computer-display, by
b1. the tool graphically drawing one or more fields, representing the respective PASE-system or their sub-system, where symbols for different system states can be put in, and
b2. graphically drawing symbols for states with belonging notions and connection means, and where the symbols can be moved and positioned in the respective system-field, and
b3. graphically drawing symbols for connections between related state-symbols, and where the connections represent the change-steps or forces or actions, which create the change-steps, and the connection symbols have connection means for attachment to the corresponding connection means of the state symbols, and thereby can connect state-symbols in one or more networks, and
b4. the tool supporting the user in positioning state-symbols and connect them with connection-symbols to the said network, and
b5. the said network describing at least a part of COA.

11. A tool according to claim 10, where the tool uses defined structures for performing its tasks, comprising the structures including at least one of (a) - (c):
a. the PASE-systems have subordinate system-selections of the type X:PASE, where X = one of PASE, e.g. S:PASE, which has a special S-perspective on PASE and handles the selection of system-changes, which have special S-relations, and where S:PASE in its turn can be sub-divided into PAE<-S and S<-PAE, and
a1. with PAE<-S is performed changes in the S-system, which operationally support superior change-operations in the PAE-systems, and
a2. with S<-PAE is performed changes in the PAE-systems, which operationally support superior change-operations in the S-system, and
a3. where subordinate system-selections of X:PASE are of type X:X, e.g. S:S, and where those system-selections are used for operations, which are handled in and by the own system, and e.g. can be military operations in the military sub-system of S, and
a4. where those said operations can be further detailed in what is here named Action Phase, and which contains defined actions with defined resources for achieving defined goals, e.g. military actions with resources for achieving defined military goals, and
a5. where more extensive actions can be sub-divided into sub-actions or coordinated/composed activities, and
a6. where the said sub-divisions in (a) are based on an operational perspective, which is central from the view of changes, and
b. the PASE-systems have sub-divisions into subordinate systems or sub-systems, where
b1. the system A includes the sub-systems: Religion, Culture and Social values, and A&V for the respective PASE, and
b2. the system S includes the Military system and the Police system (the Judicial system)
b3. the system E includes most of the daily activities/work of people, as being producers or consumers, and
b4. where the system E has a wide area of subordinate systems and structures, and
b5. the system P contains the governing system including a structure of government, parliament, counties/sub-states and cities or corresponding for various countries, and
c. the sub-systems according to (a) or (b) above have subsystems, and
c1. where the number of needed steps in the sub-divisions is dependent on the present problems and operational needs,
d. and the technical tool supports at least one of (a) - (c) above and (e) - (f) below with support of graphics on a computer display, with corresponding functions as in claim 1 and 2, where
e. the technical tool handles the system-related dependences with connections between successive system-changes within and between system-fields, and where
f. the technical tool handles the system-related dependences with connections hierarchically (parent to children) between the systems, i.e. between states at different system levels.

12. A tool according to some of claim 1 - 11, where the changes in different parts of PASE are performed by different organisations and there are needs for co-ordinations of actions also in the lower hierarchical system-levels, which are sorted below different PASE, e.g. a diplomatic action and an information action, which will be made before an economic pressure (business-action), made before a military action, and the tool comprises
a. an extra operation-dependent structure is implemented, which relates different actions to each other with notion of the type of dependences, and
b. the technical tool handles the system-superior dependence-structure and generates e.g. the functions; alarms, observation-points and decision-points related to the respective planned action, and
c. where presentations of the said functions e.g. can be made in the form of symbol-additions in a graphical time-plan or in a synchronisation matrix.

13. A tool according to some of claim 1 - 12, comprising the sub-systems of the E-system including at least one of the groups or attributes in (a) - (d):
a. producers or consumers
b. public or private operations/enterprises
c. various branches of industry and business
d. education, health and social care.

14. A tool according to some of claim 1 - 13, comprising
a. the start-states in PASE indicating the service-levels of the systems are described for various groups of people and are compared, and
b. differences in start-states between various groups of people and differences between needs of a group and the society system services indicate possible conflict-sources,
c. the technical tool supporting the creation of (a) and (b) with support of graphics on a computer-display by
c1. offering system-boxes for the respective PASE, where symbols are positioned for the respective group of people, and where the obtained service-levels according to (a) are marked with the support of a scale, and
c2. offering presentation of conflict-sources per system-box by presenting differences according to (b) for different groups of people.

15. A tool according to some of claim 1 - 14, comprising the forces DRIMPoB being used for performing changes in at least one of (a) and (b):
a. the PASE-systems, where the forces notions are:
D = Diplomacy
R = Political ruling/governing (e.g. government, parliament, counties/states, cities)
I = Information
M = Military
Po = Police (Judicial)
B = Business
b. the MASO-systems, with structure according to:
- M (P): the Force R manages (rules/governs) inwards, and the Force D "negotiates" outwards,
- A: the Force I is used for information inwards as well as outwards
- S: the Force Po watches the following inwards of laws and rules, and M protects outwards
- O (E): the Force B is used in actions/operations inwards as well as outwards, and
b1. where the MASO-system structure with belonging forces can be regarded as a more general structure, where PASE is more special for society development, and the MASO system forces can be defined more specifically for the respective defined organisation and operation, and including at least one of (b2) and (b3),
b2. including at least one of: association, company, society organisation, family, group of people, various kinds of groupings, and
b3. regarding changes/development of products in user-perspectives

16. A tool according to some of claim 1 - 15, comprising
a. the needs of a group of people being described in a Maslow-inspired selection of the functions "PSBRSI", which are given in an approximate need-hierarchy, where the needs of a first function are prioritised before the needs of a second function until the need-fulfilment of the first function has reached above a certain limit and/or has been noticeable larger than the one of the second function,
b. the levels of need-fulfilment of various groups of people being described and compared, and
c. differences in levels of need-fulfilment between different groups of people and differences between the needs of a group and the society system services indicating possible conflict sources,
d. the technical tool supporting the creation of (a) - (c) above with support of graphics on a computer-display by
d1. offering function-boxes for the respective PSBRSI, where symbols are positioned for the respective group of people, and where the obtained levels of need-fulfilment according to (b) are marked with the support of a scale, and
d2. offering presentation of conflict-sources per system-box by presenting differences according to (c) for different groups of people.

17. A tool according to some of claim 1 - 16, comprising
a. the successive state-changes in the PASE-systems, which are included in COA, being created after analysis of parties' COG, DP and Vuln, according to at least one of (a1) - (a3)
a1. a party's COA is directed towards, or adapted to, other parties' COG, DP and Vuln,
a2. a first party positions other parties' COG, DP and Vuln in a first system-oriented structure and a capability-oriented scale, and
a3. the first party's own force capabilities are positioned in a corresponding second structure and scale, and are matched against the values in the first one, and
b. the technical tool supporting (a) and the selection of a party's COA, based on at least one of the selectable conditions in (b1 - b2),
b1. where one selectable condition is a positive capability balance with small resource-use for the party, and
b2. where other selectable conditions are based on parties' needs, service-levels of the society systems and possible conflict sources, and
c. parties' COG, DP and Vuln being described as system states and/or force-states and can be included in the description of the start-states of the systems, and
d. the technical tool supporting (b) with support of graphics on a computer-display by at least one of (d1 - d2)
d1. offering forms for input of the description of COG, DP and Vuln, and
d2. offering a capability-oriented scale for the force-states.

18. A tool according to some of claim 1 - 17, where
a. the respective parties' have a number of action-alternatives, and a first party values his action-alternatives in relations to other parties' action-alternatives, and
b. each party's action-alternatives are ranked between them for combinations of other parties action-alternatives, and
c. a number of combinations of own and others' action-alternatives are selected, including at least a number high-ranked combinations, including possibly obtained "Nash-equilibrium", for continued analysis, comprising
d. the technical tool supporting the creation of (b) - (c) above with support of graphics on a computer-display by at least one of (d1) - (d3)
d1. offering input of parties' different action-alternatives in table frames and ranking of the respective combination in the respective row and column of the table, and
d2. selectably marking the high-ranked alternatives, and
d3. selectably offering the user of the tool to mark which high-ranked alternatives plus possible other alternatives he selects for continuous analysis.

19. A tool according to some of claim 1 - 18, where selected combinations of action-alternatives are analysed, and probability based outcome areas are estimated, comprising
a. users marking on a value-based scale a set of possible outcomes, including examples with higher and lower values, and where the said outcomes are constituting comparison objects,
b. performing (a) for parties with a selected set of outcome values for the respective party,
c. users describing an action-alternative, which is selected for a party in (b), including the best and worst outcome of the alternative, selectably completed by the most probable, and
c1. marking the outcome positions related to the comparison objects on the scale in (a),
d. the technical tool supporting (a) - (c1) above with support of graphics on a computer-display by at least one of (d1) - (d4)
d1. generating the scale and symbols for marking the outcomes,
d2. calculating averages, σ-values (standard deviation) and presenting a probability-based outcome area,
d3. alarming at risk for undesired outcome/result, e.g. if the probability is above a given limit for outcome values below a given limit,
d4. estimating probabilities of the single probability alternatives.

20. A tool according to some of claim 1 - 19, comprising
a. the society system PASE being replaced by the general notion MASO, and
b. where the change regards at least one of (b1) - (b3),
b1 organisations, associations, or companies with a MASO-system structure, which corresponds to the PASE-structure
b2. families or groups of relatives with an informal MASO-structure
b3 products, wares or services, where users' operations have a MASO-structure and product-changes are related to the MASO-systems and related changes in those systems.
